# FASCICULE DE BREVET EUROPEEN

(11) **EP 0 450 465 B1**
(45) Date de publication et mention de la délivrance du brevet: **12.10.1994**
(21) Numéro de dépôt: 91104758.7
(22) Date de dépôt: 26.03.1991
(51) Int. Cl.: C03B 37/018

(54) **Procédé de fabrication de préformes pour la réalisation de fibres optiques par étirage**
Verfahren zum Herstellen von Vorformen für die Herstellung optischer Fasern durch Ziehen
Process of making preforms for the production of optical fibres by drawing

(30) Priorité: 29.03.1990 FR 9004033
(43) Date de publication de la demande: 09.10.1991
(73) Titulaire: ALCATEL ALSTHOM COMPAGNIE GENERALE D'ELECTRICITE, 75382 Paris Cédex 08 (FR)
(72) Inventeur: Le Sergent, Christian, F-91460 Marcoussis (FR)
(74) Mandataire: Weinmiller, Jürgen

(56) Documents cités:
- FR-A- 2 438 017
- US-A- 4 257 797
- US-A- 4 334 903
- PATENT ABSTRACTS OF JAPAN, vol. 13, no. 156 (C-585)[3503], 14 avril 1989;
- & JP-A-63 310 740 (HITACHI CABLE LTD) 19-12-1988

## Description

La présente invention concerne un procédé de fabrication de préformes pour la réalisation de fibres optiques par étirage, dans lequel on forme par couches successives à l'intérieur d'un tube à base de silice un dépôt de silice, éventuellement additionnée d'un agent dopant, à partir d'une phase vapeur contenant un composé gazeux du silicium, de l'oxygène et éventuellement un composé gazeux d'un élément dopant de la silice, puis on soumet le tube à un rétreint de façon à faire disparaître la zone axiale vide.

Il est bien connu de déposer à l'intérieur d'un tube de silice fluoré des couches successives de silice, éventuellement dopée, par introduction à l'intérieur du tube d'un mélange gazeux d'halogénure de silicium, d'oxygène et d'une petite quantité d'un composé d'un élément dopant augmentant ou diminuant l'indice de réfraction de la silice, et chauffage de ce mélange, soit de l'extérieur du tube par un chalumeau en translation, soit par formation d'un plasma mobile. Les brevets FR-A-2 438 017 et US-A-4 257 797 décrivent un tel procédé.

Ce procédé comporte cependant certaines insuffisances, car la quantité de silice déposée est pratiquement limitée, l'aire de la section droite de la silice dopée déposée ne pouvant guère dépasser 150 mm², et le rapport du diamètre de la gaine optique obtenue après étirage au diamètre du coeur reste supérieur à 7. On ne peut dès lors obtenir par étirage plus de 20 km de fibre optique par mètre de préforme.

La présente invention a pour but de procurer un procédé de fabrication de telles préformes qui permette d'obtenir des quantités de silice déposées plus importantes, avec des rapports diamètre de gaine optique/diamètre de coeur plus élevés, et des longueurs de fibre optique par unité de longueur de préforme plus élevées, et pouvant atteindre 100 à 200 km de fibre optique par mètre de préforme.

Selon l'invention le procédé comme indiqué ci-dessus est caractérisé en ce qu'après le rétreint on élimine le silice du tube initial, puis en ce que l'on effectue sur le cylindre subsistant une recharge par dépôt au chalumeau à plasma à partir d'une phase gazeuse comprenant de l'oxygène et un dérivé halogéné de la silice.

Il répond en outre de préférence à au moins l'une des caractéristiques suivantes :
- On élimine alors la silice du tube initial par évaporation au chalumeau oxhydrique ou au chalumeau à plasma, par attaque à l'acide fluorhydrique ou par usinage mécanique.
- On introduit dans la phase gazeuse de recharge au chalumeau à plasma un fluorure facilement décomposable à haute température en fluor jouant le rôle d'agent dopant.

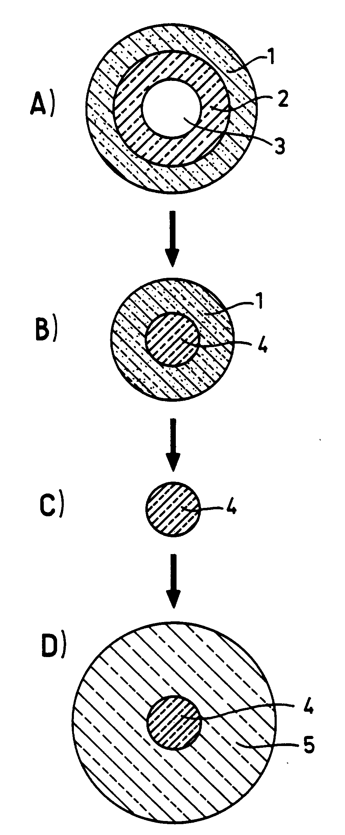

Il est décrit ci-après, à titre d'exemple et en référence à la figure schématique unique du dessin annexé, la préparation d'une préforme de fibre optique selon l'invention.

Selon la première opération, représentée en A de la figure, on forme par le procédé connu de dépôt en phase vapeur d'un mélange gazeux d'halogénure de silicium, d'oxygène et éventuellement d'une petite quantité d'un composé d'élément dopant, avec chauffage externe par chalumeau ou génération d'un plasma, une couche interne 2 à l'intérieur d'un substrat tubulaire 1 de silice de qualité courante. On peut effectuer un chauffage sans précaution particulière, entraînant éventuellement une évaporation partielle du substrat de silice, puisque celui-ci sera éliminé par la suite. Il subsiste une zone axiale vide 3.

La deuxième opération, représentée en B de la figure, est le rétreint du tube, obtenu par chauffage, entraînant la disparition du vide axial, avec formation d'un cylindre 4 correspondant au dépôt effectué à l'intérieur du tube de silice 1.

Dans une troisième opération, représentée en C de la figure, on élimine le tube de silice initial, soit par chauffage au chalumeau oxhydrique ou au chalumeau à plasma, soit par attaque chimique à l'acide fluorhydrique, soit par usinage mécanique au tour. On ne laisse subsister que le cylindre 4 formé par la matière du dépôt initial.

Dans la quatrième opération (D de la figure), on effectue autour du cylindre 4 une recharge 5 de silice synthétique fluorée sèche, d'indice inférieur à celui de la silice du coeur, élaborée à l'aide d'une torche à plasma à partir de tétrachlorure de silicium gazeux, d'oxygène, et d'une petite quantité d'hexafluorure de soufre donnant naissance à l'élément fluor dopant.

La préforme obtenue permet d'obtenir par une opération d'étirage classique de grandes longueurs de fibre optique, de l'ordre de 100 à 200 km de fibre optique par mètre de préforme.

## Revendications

1. Procédé de fabrication de préformes pour la réalisation de fibres optiques par étirage, dans lequel on forme par couches successives à l'intérieur d'un tube à base de silice (1) un dépôt de silice, éventuellement additionnée d'un agent dopant, à partir d'une phase vapeur contenant un composé gazeux du silicium, de l'oxygène et éventuellement un composé gazeux d'un élément dopant de la silice, puis on soumet le tube à un rétreint de façon à faire disparaître la zone axiale vide (3),
caractérisé en ce que l'on élimine alors la silice du tube initial, puis en ce que l'on effectue sur le cylindre subsistant (4) une recharge (5) par dépôt au chalumeau à plasma à partir d'une phase gazeuse comprenant de l'oxygène et un dérivé halogéné de la silice.

2. Procédé selon la revendication 1, caractérisé en ce que l'on élimine le matériau du tube initial (1) par évaporation au chalumeau oxyhydrique ou au chalumeau à plasma, par attaque à l'acide fluorhydrique ou par usinage mécanique.

3. Procédé selon les revendications 1 ou 2, caractérisé en ce que l'on introduit dans la phase gazeuse de recharge au chalumeau à plasma un fluorure facilement décomposable à haute température en fluor jouant le rôle d'agent dopant.

## Claims

1. A method of fabricating preforms for making optical fibers by drawing, in which a silica deposit optionally including a doping agent is formed in successive layers inside a silica-based tube (1) from a chemical vapor containing a gaseous compound of silicon, oxygen, and optionally a gaseous compound of an element for doping the silica, with the tube then being subjected to collapsing so as to cause the empty axial zone (3) to disappear,
the method being characterized in that the silica of the initial tube is then eliminated, after which a recharge (5) is made around the remaining cylinder (4) by plasma torch deposition from a gas comprising oxygen and a halogen derivative of silica.

2. A method according to claim 1, characterized in that the substance of the initial tube (1) is eliminated by evaporation using an oxy-hydrogen torch or a plasma torch, by etching using hydrofluoric acid, or by mechanical machining.

3. A method according to claim 1 or 2, characterized in that the plasma torch gas for making the recharge includes a fluoride that decomposes easily at high temperature into fluorine to act as a doping agent.

## Patentansprüche

1. Verfahren zur Herstellung von Rohlingen zur Erzeugung von Lichtleitfasern durch Ziehen, bei dem man durch aufeinanderfolgende Schichten im Inneren eines Rohrs (1) auf der Basis von Siliziumoxid einen Siliziumoxidbelag, eventuell mit dem Zusatz eines Dotiermittels, ausgehend von einer Dampfphase bildet, die eine gasförmige Mischung von Silizium, Sauerstoff und eventuell einer gasförmigen Verbindung eines Dotierelements für das Siliziumoxid enthält, und das Rohr einer Querschnittsverminderung unterzogen wird, um den axialen Hohlraum (3) verschwinden zu lassen, dadurch gekennzeichnet, daß nach der Querschnittsverminderung das Siliziumoxid des ursprünglichen Rohrs entfernt wird und dann auf den verbleibenden Zylinder (4) eine neue Schicht (5) mittels Plasmabrenner ausgehend von einer gasförmigen Phase, die Sauerstoff und ein Halogenderivat von Siliziumoxid enthält, aufgebracht wird.

2. Verfahren nach Anspruch 1, dadurch gekennzeichnet, daß man das Siliziumoxid des ursprünglichen Rohrs (1) durch Verdampfung mittels Wasserstoffbrenner oder Plasmabrenner, durch Angriff mit Flußsäure oder durch mechanische Bearbeitung entfernt.

3. Verfahren nach den Ansprüchen 1 oder 2, dadurch gekennzeichnet, daß man in der gasförmigen Phase beim Wiederbeschichten mittels Plasmabrenner ein Fluorid einführt, das leicht bei hoher Temperatur in Fluor zersetzt werden kann und die Rolle des Dotiermittels spielt.
